# EUROPEAN PATENT APPLICATION

(11) **EP 4 843 965 A1**
(43) Date of publication of application: **25.11.2026**
(21) Application number: 26179056.2
(22) Date of filing: 15.05.2026
(51) Int. Cl.: C03B 37/014

(54) **METHOD FOR MANUFACTURING OPTICAL FIBER PREFORM**

(30) Priority: 19.05.2025 JP 2025083433
(71) Applicant: Shin-Etsu Chemical Co., Ltd., Chiyoda-ku Tokyo 100-0005 (JP)
(72) Inventor: URATA, Yuhei, Ibaraki, 3140102 (JP)
(74) Representative: Pfenning, Meinig & Partner mbB

(57) **Abstract**

(Problem) Provided is a method for dehydrating and transparently vitrifying a soot body, which enables a reduction in an amount of expensive helium gas used as a sintering gas when dehydrating and transparently vitrifying the soot body.

(Solution) Included are dehydrating by suspending a glass fine particle deposit in a core tube provided with a heating heater on its outside, and by heating the glass fine particle deposit while changing a relative position of the glass fine particle deposit and the heating heater under an atmosphere containing a chlorine-based gas to perform a dehydration treatment; and transparently vitrifying by heating the glass fine particle deposit while changing the relative position of the glass fine particle deposit and the heater under an atmosphere containing an inert gas to perform a transparent vitrification treatment, in which intermediately supplying an inert gas different from an inert gas species supplied into the core tube in the transparently vitrifying is provided between the dehydrating and the transparently vitrifying.

## Description

### BACKGROUND

### 1. TECHNICAL FIELD

The present invention relates to a method for manufacturing an optical fiber preform that becomes an optical fiber by being drawn.

### 2. RELATED ART

As with an optical fiber, a central portion of an optical fiber preform has a higher refractive index than a peripheral portion, and this is referred to as a core portion. A main constituent component of a general optical fiber for communication is SiO₂, but GeO₂ is added as a dopant to the core portion in order to increase the refractive index. As a method for manufacturing an optical fiber preform, there is a method in which a glass fine particle deposit (soot body) manufactured by a vapor-phase synthesis method such as a vapor-phase axial deposition method (VAD method) or an outside vapor-phase deposition method (OVD method) is heated and vitrified transparently. An optical fiber is manufactured by heating and drawing the optical fiber preform manufactured in this manner and reducing a diameter thereof.

The VAD method is a method for manufacturing a soot body by spraying glass fine particles generated in a burner flame onto a starting member that rises in a vertical direction while rotating. That is, this is a method in which glass fine particles generated by a flame hydrolysis reaction and a high-temperature thermal oxidation reaction that occur by supplying a silicon chloride such as silicon tetrachloride into an oxyhydrogen flame are attached to and deposited on the starting member. By heating and sintering the soot body manufactured in this manner in a vacuum or an inert gas atmosphere, dehydration and transparent vitrification are performed, and an optical fiber preform is obtained.

Some heating furnaces that perform dehydration and transparent vitrification have a configuration including a core tube and a heating heater covering a periphery thereof, and an inside of the core tube is isolated from outside air. The heater is attached inside a heating furnace body filled with a heat insulating material, and is configured to heat the soot body via the core tube. In one configuration, the heater is attached near a longitudinal center of the core tube, and dehydration and transparent vitrification are performed as the soot body passes through a heating region of the heater. In another configuration, the heater is attached over an entire longitudinal range of the core tube, and dehydration and transparent vitrification are performed without the soot body moving within the core tube.

### SUMMARY

### TECHNICAL PROBLEM

At present, it is desired to reduce a manufacturing cost of an optical fiber preform. Examples of a high-cost factor in preform manufacturing include use of an inert sintering gas typified by a helium gas when dehydrating and transparently vitrifying a soot. During the transparent vitrification, since the soot body is heated from the outside, vitrification progresses from the surface, and thus, an escape route for sintering gas or air present in voids inside the soot body may be lost, or the sintering gas may no longer dissolve into the glass, so that the soot body does not become transparent glass. A portion that fails to achieve transparency is determined as a defective portion referred to as unmelted residue. Therefore, occurrence of the unmelted residue should be suppressed. The larger the solubility and diffusion coefficient of the supplied sintering gas in glass, the less likely the unmelted residue is to occur. In particular, since a helium gas has high solubility and a high diffusion coefficient in glass, use of helium gas is highly effective in suppressing the unmelted residue. However, a helium gas is more expensive than other inert gases such as argon gas and nitrogen gas, and use of a large amount of helium gas causes an increase in cost.

In this regard, an object of the present invention is to provide a method for dehydrating and transparently vitrifying a soot body, which enables a reduction in an amount of expensive helium gas used as a sintering gas when dehydrating and transparently vitrifying the soot body.

### SOLUTION TO PROBLEM

In this regard, in order to solve the above-described problems, the present inventors studied optimization of species of sintering gases supplied for respective steps. As a result, in order to reduce the amount of helium gas used, the present inventors have found that the occurrence of unmelted residue is suppressed when an inert sintering gas of a gas species other than a helium gas is used in a dehydration step, and even when an inert sintering gas used in an intermediate step between the dehydration step and the transparent vitrification step contains a same inert gas species as that used in the dehydration step, and have achieved the present invention.

A method for manufacturing an optical fiber preform of the present invention includes: dehydrating by suspending a glass fine particle deposit in a core tube provided with a heating heater on its outside, and by heating the glass fine particle deposit while changing a relative position of the glass fine particle deposit and the heating heater under an atmosphere containing a chlorine-based gas to perform a dehydration treatment; and transparently vitrifying by heating the glass fine particle deposit while changing the relative position of the glass fine particle deposit and the heater under an atmosphere containing an inert gas to perform a transparent vitrification treatment, wherein intermediately supplying an inert gas different from an inert gas species supplied into the core tube in the transparently vitrifying is provided between the dehydrating and the transparently vitrifying.

The inert gas supplied into the core tube in the intermediately supplying is preferably an argon gas or a nitrogen gas, and the inert gas supplied into the core tube in the transparently vitrifying is a helium gas. Further, in the intermediately supplying, it is desirable that the relative position of the glass fine particle deposit and the heater be returned to an approximately same position as at start of the dehydrating, and a temperature of the heater be further increased. Further, in the intermediately supplying, it is desirable that a dehydration treatment amount at an end portion of the glass fine particle deposit be adjusted, and further in the intermediately supplying, a fluorine doping treatment amount at an end portion of the glass fine particle deposit may be adjusted.

The dehydration step may be performed under an atmosphere further containing a fluorine-based gas.

### EFFECT OF THE INVENTION

According to the method for manufacturing an optical fiber preform of the present invention, it is possible to reduce the amount of expensive helium gas used in the steps of dehydrating and transparently vitrifying a soot body to reduce a manufacturing cost, and it is possible to obtain an optical fiber preform in which an amount of unmelted residue of the optical fiber preform is small and which has no problem in transmission loss of an optical fiber obtained by drawing.

### BRIEF DESCRIPTION OF THE DRAWINGS

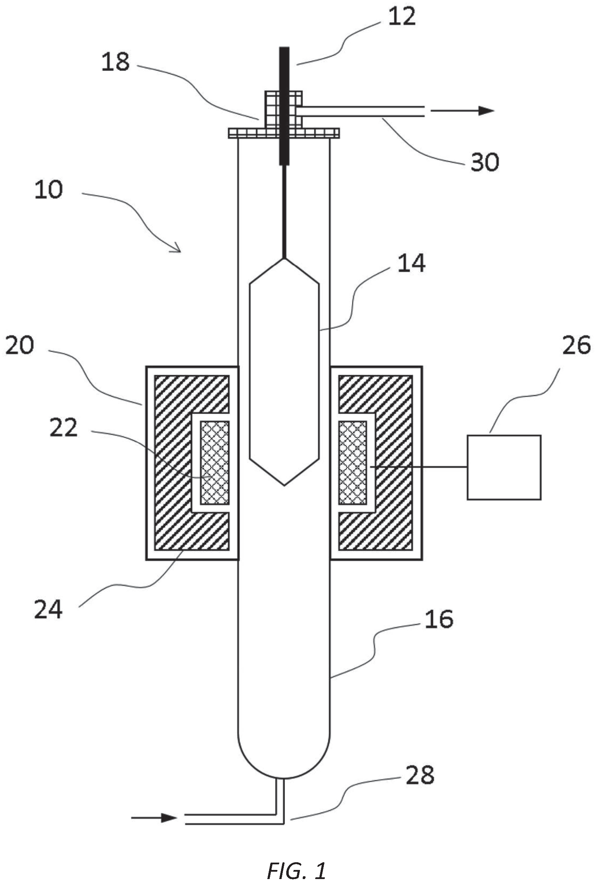

FIG. 1 is a schematic longitudinal sectional view illustrating an example of a sintering device for dehydrating and transparently vitrifying a soot body.

### DESCRIPTION OF EXEMPLARY EMBODIMENTS

A method for manufacturing an optical fiber preform of the present invention includes, between a dehydration step of heating a glass fine particle deposit (a soot body) while changing a relative position of the soot body and a heating heater under an atmosphere containing a chlorine-based gas to perform a dehydration treatment, and a transparent vitrification step of heating the soot body while changing the relative position of the soot body and the heater under an atmosphere containing an inert gas to perform a transparent vitrification treatment, an intermediate step of supplying an inert gas different from an inert gas species supplied into a core tube in the transparent vitrification step. Examples of the inert gas supplied in the intermediate step include an argon gas or a nitrogen gas. The inert gas supplied into the core tube in the transparent vitrification step is a helium gas. In the intermediate step, a dehydration treatment amount at an end portion of the soot body may be adjusted by heating the end portion of the soot body for a certain time in a state in which an atmosphere contains a chlorine-based gas. The dehydration step may be performed under an atmosphere further containing a fluorine-based gas. By performing a treatment under the atmosphere containing the fluorine-based gas, fluorine can be doped into the soot body. Further, also in the intermediate step, the fluorine-based gas may be supplied. A fluorine doping amount at an end portion of the soot body can be adjusted by an amount of the fluorine-based gas supplied in the intermediate step.

Hereinafter, the embodiment for carrying out the present invention will be described through examples and comparative examples of the present invention with reference to the drawings, but these do not limit the present invention. First, a soot body made of glass fine particles deposited by a burner for depositing glass fine particles is manufactured by a VAD method or the like. A synthesized soot body is heated using a zone heating furnace and is vitrified transparently to obtain an optical fiber preform. FIG. 1 is an example of a schematic longitudinal sectional view of a sintering device for dehydrating and transparently vitrifying a soot body. In FIG. 1, in a sintering device 10, a soot body 14 connected to a shaft rod 12 is suspended in a core tube 16. The shaft rod 12 penetrates an upper lid 18 and is connected to a motor (not illustrated) for moving the soot body 14 up and down and rotating the soot body 14.

A heating furnace body 20 for heating the soot body 14 is disposed on an outer periphery of a portion of the core tube 16, and a cylindrical heating heater 22 and further a heat insulating material 24 for covering it are installed in the heating furnace body. A temperature in the furnace is monitored by a temperature sensor, and a temperature control device 26 is configured to adjust an output of the heating heater 22 to control the temperature in the furnace. A sintering gas introduction pipe 28 is connected below the core tube 16, and a sintering gas necessary for dehydration and transparent vitrification is supplied. The supplied sintering gas flows upward in the core tube 16 and is exhausted from a sintering gas exhaust pipe 30 provided in the upper lid 18.

### Example

Using a manufacturing device illustrated in FIG. 1, the soot body having a length of 1650 mm was sintered under various conditions shown in Table 1, and presence or absence of unmelted residue when the soot body was vitrified transparently was investigated.

First, the soot body manufactured by the VAD method was suspended in the core tube. While supplying a mixed gas of a chlorine gas for dehydration and an inert argon gas (chlorine gas concentration: 3 mol%) into the core tube from a gas introduction tube at a flow rate of 26 L/min., a heater temperature was set to about 1250°C to 1350°C, and the soot body was heated while pulling it down, and the soot body was held for a predetermined time at a lower end position of the downward pulling (holding step 1) to perform a dehydration treatment (dehydration step). Next, an intermediate treatment (intermediate step) including a soot pulling-up step of pulling the soot body upward, a temperature rising step for the heater temperature, and a holding step 2 of holding the soot body for a predetermined time at an upper end position of the upward pulling was performed. Thereafter, a transparent vitrification treatment (transparent vitrification step) was performed by heating the soot body to about the heater temperature of 1500°C to 1620°C while pulling it down. Note that an inert gas species to be supplied and a treatment time (h) in each step are as set forth in Table 1.

**Table 1**

| | DEHYDRATION STEP | HOLDING STEP 1 | | SOOT PULLING-UP STEP | | HOLDING STEP 2 | | TEMPERATURE RISING STEP | | TRANSPARENT VITRIFICATION STEP |
|---|---|---|---|---|---|---|---|---|---|---|
| | INERT GAS SPECIES | INERT GAS SPECIES | [h] | INERT GAS SPECIES | [h] | INERT GAS SPECIES | [h] | INERT GAS SPECIES | [h] | INERT GAS SPECIES |
| EXAMPLE 1 | ARGON | ARGON | 0.00 | ARGON | 0.15 | ARGON | 0.00 | ARGON | 0.46 | HELIUM |
| EXAMPLE 2 | ARGON | ARGON | 0.00 | ARGON | 0.15 | ARGON | 0.00 | ARGON | 0.39 | HELIUM |
| EXAMPLE 3 | ARGON | ARGON | 0.01 | ARGON | 0.15 | ARGON | 0.50 | ARGON | 0.43 | HELIUM |
| EXAMPLE 4 | ARGON | ARGON | 0.20 | ARGON | 0.15 | ARGON | 0.01 | ARGON | 0.43 | HELIUM |
| EXAMPLE 5 | NITROGEN | NITROGEN | 0.00 | NITROGEN | 0.15 | NITROGEN | 0.00 | NITROGEN | 0.39 | HELIUM |
| COMPARATIVE EXAMPLE 1 | ARGON | HELIUM | 0.00 | HELIUM | 0.15 | HELIUM | 0.00 | HELIUM | 0.46 | HELIUM |
| COMPARATIVE EXAMPLE 2 | ARGON | ARGON | 0.00 | ARGON | 0.15 | ARGON | 0.00 | ARGON | 0.40 | ARGON |

### Example 1;

In the core tube in an argon gas atmosphere containing a chlorine gas, heating was performed at 1315°C, and the soot body was heated while pulling it down to perform the dehydration treatment. Furthermore, the soot body was held for a predetermined time at the lower end position of the downward pulling (holding step 1) to adjust a dehydration treatment amount at an end portion of the soot body. Next, in the intermediate step including the soot pulling-up step of pulling the soot body upward, the holding step 2 of holding for the predetermined time, and further the temperature rising step of increasing the heater temperature, an argon gas was supplied as an inert gas species into the core tube and heating was performed. Hereinafter, the intermediate step is simply abbreviated as an intermediate step including the soot pulling-up step and the temperature rising step. In the transparent vitrification step, the inert gas species to be supplied was changed to a helium gas, and heating was performed with the heater at 1610°C to perform transparent vitrification, thereby obtaining a core glass rod. In a product effective portion of this core glass rod, no occurrence of unmelted residue that had not been vitrified was observed. There was also no problem in transmission loss of an optical fiber obtained by externally attaching a cladding to this core glass rod and performing drawing.

### Example 2;

In the core tube in an argon gas atmosphere containing a chlorine gas, heating was performed to 1340°C to perform the dehydration treatment of the soot body. Next, in the intermediate step including the soot pulling-up step and the temperature rising step, an argon gas was supplied as an inert gas species into the core tube and heating was performed. In the transparent vitrification step, the inert gas species to be supplied was changed to a helium gas, and heating was performed with the heater at 1595°C to perform transparent vitrification, thereby obtaining a core glass rod. In a product effective portion of this core glass rod, no occurrence of unmelted residue was observed. There was also no problem in transmission loss of an optical fiber obtained by externally attaching a cladding to this and performing drawing.

### Example 3;

In the core tube in an argon gas atmosphere containing a chlorine gas, heating was performed to 1325°C to perform the dehydration treatment of the soot body. Next, in the intermediate step including the soot pulling-up step and the temperature rising step, an argon gas was supplied as an inert gas species into the core tube and heating was performed. In the holding step 2 and the temperature rising step, silicon tetrafluoride is also supplied in order to adjust a fluorine doping amount at a lower end portion of the soot body. In the transparent vitrification step, the inert gas species to be supplied was changed to a helium gas, silicon tetrafluoride was also supplied for fluorine doping, and heating was performed with the heater at 1600°C to perform transparent vitrification, thereby obtaining a core glass rod. No occurrence of unmelted residue was observed in a product effective portion of this core glass rod. There was also no problem in transmission loss of an optical fiber obtained by externally attaching a cladding to this and performing drawing.

### Example 4;

In the core tube in an argon gas atmosphere containing silicon tetrafluoride and a chlorine gas, heating was performed to 1265°C to perform the fluorine doping and the dehydration treatment of the soot body. In the holding step 1, silicon tetrafluoride is also supplied in order to adjust the fluorine doping amount. Next, in the intermediate step including the soot body pulling step and the temperature rising step, an argon gas was supplied as an inert gas species into the core tube and heating was performed. In the transparent vitrification step, the inert gas species to be supplied was changed to a helium gas, and heating was performed with the heater at 1525°C to perform transparent vitrification, thereby obtaining a core glass rod. In a product effective portion of this core glass rod, no occurrence of unmelted residue was observed. There was also no problem in transmission loss of an optical fiber obtained by externally attaching a cladding to this and performing drawing.

### Example 5;

in the core tube in a nitrogen gas atmosphere containing a chlorine gas, heating was performed to 1340°C to perform the dehydration treatment of the soot body. Next, in the intermediate step including the soot pulling-up step and the temperature rising step, a nitrogen gas was supplied as an inert gas species into the core tube and heating was performed. In the transparent vitrification step, the inert gas species to be supplied was changed to a helium gas, and heating was performed with the heater at 1595°C to perform transparent vitrification, thereby obtaining a core glass rod. In a product effective portion of this core glass rod, no occurrence of unmelted residue was observed. There was also no problem in transmission loss of an optical fiber obtained by externally attaching a cladding to this and performing drawing.

### Comparative Example 1;

In the core tube in an argon gas atmosphere containing a chlorine gas, heating was performed to 1315°C to perform the dehydration treatment of the soot body. Next, in the intermediate step including the soot body pulling step and the temperature rising step, a helium gas was supplied as an inert gas species into the core tube and heating was performed. Also in the transparent vitrification step, the inert gas species to be supplied was kept as the helium gas, and heating was performed with the heater at 1610°C to perform transparent vitrification, thereby obtaining a core glass rod.

No occurrence of unmelted residue was observed in a product effective portion of this core glass rod. There was also no problem in transmission loss of an optical fiber obtained by externally attaching a cladding to this and performing drawing. However, compared with Example 1, a total amount of helium gas used was 19% larger, resulting in an increase in cost.

### Comparative Example 2;

In the core tube in an argon gas atmosphere containing a chlorine gas, heating was performed to 1360°C to perform the dehydration treatment of the soot body. Next, in the intermediate step including the soot body pulling step and the temperature rising step, an argon gas was supplied as an inert gas species into the core tube and heating was performed. Also in the transparent vitrification step, the inert gas species to be supplied was kept as the argon gas, and heating was performed with the heater at 1600°C to perform transparent vitrification, thereby obtaining a core glass rod.

In this core glass rod, unmelted residue occurred over an entire region other than a lower tapered portion suspended.

### EXPLANATION OF REFERENCES

10: sintering device;
12: shaft rod;
14: soot body;
16: core tube;
18: upper lid;
20: heating furnace body;
22: heating heater;
24: heat insulating material;
26: temperature control device;
28: sintering gas introduction pipe; and
30: sintering gas exhaust pipe.

## Claims

1. A method for manufacturing an optical fiber preform, comprising: dehydrating by suspending a glass fine particle deposit in a core tube provided with a heating heater on its outside, and by heating the glass fine particle deposit while changing a relative position of the glass fine particle deposit and the heating heater under an atmosphere containing a chlorine-based gas to perform a dehydration treatment; and transparently vitrifying by heating the glass fine particle deposit while changing the relative position of the glass fine particle deposit and the heater under an atmosphere containing an inert gas to perform a transparent vitrification treatment, wherein intermediately supplying an inert gas different from an inert gas species supplied into the core tube in the transparently vitrifying is provided between the dehydrating and the transparently vitrifying.

2. The method for manufacturing an optical fiber preform according to claim 1, wherein, in the intermediately supplying, the inert gas supplied into the core tube is an argon gas.

3. The method for manufacturing an optical fiber preform according to claim 1, wherein, in the intermediately supplying, the inert gas supplied into the core tube is a nitrogen gas.

4. The method for manufacturing an optical fiber preform according to any one of claims 1 to 3, wherein, in the transparently vitrifying, the inert gas supplied into the core tube is a helium gas.

5. The method for manufacturing an optical fiber preform according to claim 1, wherein, in the intermediately supplying, the relative position of the glass fine particle deposit and the heater is returned to an approximately same position as at start of the dehydrating.

6. The method for manufacturing an optical fiber preform according to claim 1, wherein, in the intermediately supplying, a temperature of the heater is further increased.

7. The method for manufacturing an optical fiber preform according to claim 1, wherein, in the intermediately supplying, a dehydration treatment amount at an end portion of the glass fine particle deposit is adjusted.

8. The method for manufacturing an optical fiber preform according to claim 2, wherein, in the intermediately supplying, a fluorine doping treatment amount at an end portion of the glass fine particle deposit is adjusted.

9. The method for manufacturing an optical fiber preform according to claim 1, wherein the dehydrating is performed under an atmosphere further containing a fluorine-based gas.
